# EUROPÄISCHE PATENTSCHRIFT

(11) **EP 2 958 680 B1**
(45) Veröffentlichungstag und Bekanntmachung des Hinweises auf die Patenterteilung: **16.08.2017**
(21) Anmeldenummer: 14705709.5
(22) Anmeldetag: 11.02.2014
(51) Int. Cl.: B05B 13/02, B05B 15/12

(54) **FÖRDERSYSTEM**
CONVEYOR
CONVOYEUR

(30) Priorität: 22.02.2013 DE 102013003057
(43) Veröffentlichungstag der Anmeldung: 30.12.2015
(73) Patentinhaber: Eisenmann SE, 71032 Böblingen (DE)
(72) Erfinder: BINDER, Dietmar, 71088 Holzgerlingen (DE); HOFBAUER, Ulrich, 71126 Gäufelden (DE); HOYER, Maximilian, 72070 Tübingen (DE); STARZ, Reiner, 71263 Weil der Stadt (DE)
(74) Vertreter: Ostertag & Partner Patentanwälte mbB
(86) Internationale Anmeldenummer: PCT/EP2014/000370
(87) Internationale Veröffentlichungsnummer: WO 2014/127893

(56) Entgegenhaltungen:
- WO-A1-01/83119
- WO-A1-2012/045938
- US-A- 5 681 619
- US-A- 5 989 644

## Beschreibung

Die Erfindung betrifft eine Anlage zur Oberflächenbehandlung von Gegenständen mit
a) wenigstens zwei Behandlungsstationen;
b) einem Fördersystem, mittels welchem die Gegenstände durch eine jeweilige Behandlungsstation hindurch förderbar sind.

In derartigen vom Markt her bekannten Anlagen werden Gegenstände durch aufeinanderfolgende Behandlungsstationen einer Behandlungsanlage gefördert, in denen die Gegenstände in mehreren Behandlungsschritten mit einer Oberflächenbeschichtung versehen werden. Derartig zu behandelnde Gegenstände sind beispielsweise Karosserieteile von Fahrzeugkarosserien oder Fahrzeugräder. Vorliegend wird die Erfindung am Beispiel von Fahrzeugrädern erläutert.

Als Fördersysteme für Fahrzeugräder haben sich dabei so genannte Spindelförderer etabliert, die häufig derart ausgebildet sind, dass alle Fahrzeugräder stets alle Behandlungsstationen hintereinander durchlaufen.

Es gibt nun Fahrzeugräder, welche sich dadurch unterscheiden, dass sie voneinander verschiedene Behandlungsschritte erhalten sollen oder die vorhandenen Behandlungsstationen einer Lackieranlage in unterschiedlicher Abfolge durchlaufen müssen. Beispielsweise erhalten Normalräder eine andere Behandlung als Sonderräder. Sonderräder sind zum Beispiel so genannte Multicolour-Räder, die eine mehrfarbige Lackierung erhalten sollen. Andere Sonderräder sind beispielsweise glanzgedrehte Räder, die eine hochglänzende Oberfläche haben, die durch eine mechanische Bearbeitung in Form von Glanzdrehen erzielt wird.

Eine Behandlung derart unterschiedlicher Fahrzeugräder in ein und derselben Lackieranlage ist üblicherweise nicht möglich, da eine Anpassung der Schrittabfolge bei einem Förderer nicht ohne weiteres und nur mit konstruktiven Umbauten möglich ist.

Eine Anlage der eingangs genannten Art, die hier ansetzt, ist aus der EP 2 024 102 B1 bekannt. Dort sind mehrere Förderer vorhanden, die durch verschiedene Behandlungsstationen hindurch verlaufen und durch Übergabeeinrichtungen fördertechnisch miteinander verbunden sind. Sobald sich ein Fahrzeugrad auf einem bestimmten Förderer befindet, durchläuft es automatisch auch die zugehörige Behandlungsstation, die von dem jeweiligen Förderer durchquert wird. Die in der EP 2 024 102 B1 beschriebene Anlage eröffnet jedoch lediglich zwei Behandlungsabfolgen, die auf Normalfelgen einerseits und auf Sonderfelgen in Form von glanzgedrehten Felgen andererseits abgestimmt sind. Eine freie Abfolge von ganz unterschiedlichen Behandlungsschritten oder auch das mehrmalige Durchlaufen von ein und derselben Behandlungsstation, ohne dass zuvor eine andere Behandlungsstation durchlaufen werden muss, ist dort nicht möglich.

Es ist daher Aufgabe der vorliegenden Erfindung, eine Anlage der eingangs genannten Art zu schaffen, welche eine bezogen auf die Abfolge einzelner Behandlungsschritte besondere Flexibilität ermöglicht.

Diese Aufgabe wird bei einer Anlage der eingangs genannten Art dadurch gelöst, dass
c) das Fördersystem einen Hauptförderer umfasst, mittels welchem Gegenstände behandlungsfrei auf einer Hauptkreisstrecke förderbar sind;
d) die Behandlungsstationen entlang der Hauptkreisstrecke angeordnet sind;
e) das Fördersystem für jede der wenigstens zwei Behandlungsstationen ein jeweiliges Stationsfördersystem umfasst, mittels welchem Gegenstände von der Hauptkreisstrecke zur Behandlungsstation, durch die Behandlungsstation und von der Behandlungsstation wieder zurück auf die Hauptkreisstrecke förderbar sind, derart, dass
f) Gegenstände wahlweise mittels eines Stationsfördersystems durch die zugehörige Behandlungsstation oder mittels des Hauptförderers an dieser vorbei gefördert werden können.

Erfindungsgemäß sind die Behandlungsstationen parallel zu dem Hauptförderer angeordnet und können jeweils über die Stationsfördersysteme separat ausgehend vom dem Hauptförderer mit zu behandelnden Gegenständen, z.B. mit Fahrzeugrädern, beschickt werden. Im Zusammenhang mit dem Hauptförderer bedeutet behandlungsfrei, dass die Fahrzeugräder nicht behandelt werden und keine Behandlungseinrichtung oder dergleichen durchlaufen, wenn sie mit Hilfe des Hauptförderers gefördert werden. Jedes Fahrzeugrad kann hierdurch die ausgewählten Behandlungsstationen in einer individuellen Abfolge, d.h. in beliebiger Kombination, Reihenfolge und Wiederholung, durchlaufen.

Es ist somit z.B. möglich, dass ein Fahrzeugrad zunächst an einer ersten Behandlungsstation vorbeigeführt und einer zweiten Behandlungsstation zugeführt wird, worauf das Fahrzeugrad im Anschluss an diese zweite Behandlungsstation wieder zu der ersten Behandlungsstation gelangt und nun dort behandelt werden kann. Insgesamt ist die Flexibilität einer derartigen Anlage hoch und der Prozessablauf kann unter Berücksichtigung der Art der vorhandenen Behandlungsstationen stets verändert und angepasst werden, ohne dass hierzu größere bauliche Maßnahmen notwendig sind.

Der Begriff Hauptkreisstrecke soll dahingehend verstanden werden, dass die Strecke einen in sich geschlossenen Verlauf hat.

Es ist günstig, wenn ein Stationsfördersystem eine Handhabungseinrichtung umfasst, mittels welcher Gegenstände von dem Hauptförderer an die Behandlungsstation übergeben werden können. In den Behandlungsstationen herrscht häufig eine eigene Arbeitsatmosphäre, die so von dem Hauptförderer getrennt gehalten werden kann. Vorzugsweise ist die Handhabungseinrichtung ein Gelenkarmroboter ist.

Insbesondere bevorzugt ist der Hauptförderer ein Power-and-Free-Förderer. Derartige Förderer sind aus dem Stand der Technik bekannt und brauchen nicht weiter erläutert zu werden.

Wenn eine Behandlungsstation eine Kühlzone umfasst, ist es besonders vorteilhaft, wenn der Stationsförderer dieser Behandlungsstation einen Nebenarmförderer umfasst, welcher die Kühlzone fördertechnisch mit dem Hauptförderer verbindet.

Es ist günstig, wenn wenigstens eine Vorbehandlungsstation vorhanden ist. Wenn beispielsweise verschiedene Fahrzeugräder unterschiedliche Vorbehandlungen benötigen, kann entweder eine einzige Vorbehandlungsstation für variable Vorbehandlungsschritte konzipiert sein, oder es können auch zwei oder mehrere Vorbehandlungsstationen vorhanden sein, die jeweils an eine bestimmte Art von Fahrzeugrädern angepasst sind. Durch das Anlagenkonzept ist es möglich, die jeweils benötigte Vorbehandlungsstation gezielt anzufahren, ohne dass andere vorhandene Vorbehandlungsstationen von dem jeweiligen Fahrzeugrad durchlaufen werden müssen.

Außerdem ist es von Vorteil, wenn ergänzend oder alternativ wenigstens eine Pulverlackierstation vorhanden ist. Wenn mehrere Pulverlackierstationen, insbesondere für verschiedenfarbige Pulverlacke, vorhanden sind, wird die Flexibilität beispielsweise insbesondere im Hinblick auf die erwähnten Multicolour-Räder nochmals erhöht.

Die Anlage wird vorteilhaft komplettiert, wenn ergänzend oder alternativ wenigstens eine Nasslackierstation vorhanden ist. Auch hier können eine oder mehrere Nasslackierstationen vorgesehen sein.

Es ist in entsprechender Weise günstig, wenn ergänzend oder alternativ wenigstens eine Decklackstation vorhanden ist.

Wenn ergänzend oder alternativ wenigstens eine Bearbeitungsstation vorhanden ist, in welcher die Gegenstände mechanisch bearbeitet werden können, können nicht nur Beschichtungen, sondern auch mechanische Arbeiten an den Gegenständen vorgenommen werden.

Besonders im Falle von Fahrzeugrädern ist es günstig, wenn die Bearbeitungsstation eine Glanzdrehstation ist.

Wenn wenigstens eine separate Kühlstation vorhanden ist, können die Gegenstände vorteilhaft nochmals separat abgekühlt werden, wenn dies erforderlich ist, ohne dass hierzu eine Behandlungsstation durchlaufen werden muss, die eigentlich zum Beschichten oder Bearbeiten der Gegenstände gedacht ist. Anstelle oder ergänzend zu einer Kühlstation kann auch eine Vorwärmstation vorgesehen sein.

Wie eingangs erläutert, ist das Anlagenkonzept besonders für die Behandlung von Fahrzeugrädern vorteilhaft.

Nachstehend wird nun ein Ausführungsbeispiel der Erfindung anhand der Zeichnungen näher erläutert. In diesen zeigen:
- Figur 1: ein schematisches Gesamtlayout einer erfindungsgemäßen Oberflächenbehandlungsanlage für Fahrzeugräder;
- Figur 2: einen Schnitt eines bodengeführten Spindelförderers.

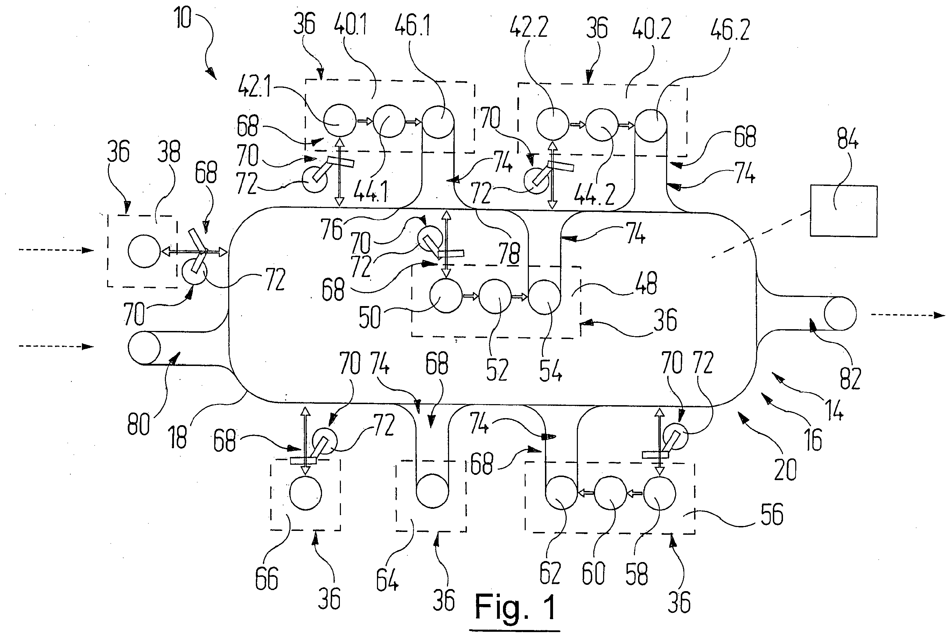

Figur 1 zeigt das Gesamtlayout einer Anlage 10 zur Oberflächenbehandlung von Gegenständen, welche beispielhaft für Fahrzeugräder 12 konzipiert ist. In der Anlage 10 können sowohl Normalräder als auch Sonderräder gefertigt werden, wie sie eingangs erläutert wurden.

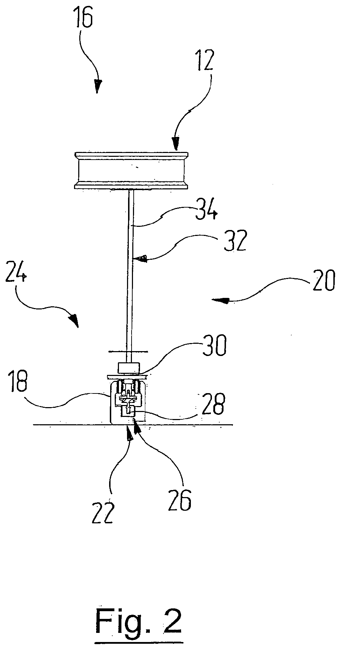

Die Anlage 10 umfasst ein Fördersystem 14 mit einem Hauptförderer 16, mittels welchem nur in Figur 2 gezeigte Fahrzeugräder 12 auf einer Hauptkreisstrecke 18 behandlungsfrei in einem geschlossenen Kreislauf gefördert werden können. Wie eingangs erwähnt bedeutet behandlungsfrei, dass die Fahrzeugräder 12 dabei nicht behandelt werden und keine Behandlungseinrichtung oder dergleichen durchlaufen und folglich mit dem Hauptförderer 16 nur gefördert werden. Die Hauptkreisstrecke 18 kann auch einen von einer in Figur 1 veranschaulichten einfachen Kreisführung abweichenden, beispielsweise gewundenen oder sogar einen mäanderförmigen Verlauf haben.

Der Hauptförderer 16 ist beim vorliegenden Ausführungsbeispiel als bodengeführter Spindelförderer 20 ausgebildet, der in Figur 2 im Schnitt gezeigt ist. Hierzu umfasst der Hauptförderer 16 eine am Boden verankerte Tragschiene 22, auf welcher eine Vielzahl von Transportwagen 24 verfahren werden können. Beim vorliegenden Ausführungsbeispiel ist hierzu entlang der Tragschiene 22 ein Endlos-Antriebsmittel 26 geführt, welches hier als Endlos-Antriebskette 28 ausgebildet ist. Oben auf der Tragschiene 22 läuft ein Fahrwerk 30 des Transportwagens 24, welches mit der Endlos-Antriebskette 28 gekoppelt ist.

Das Fahrwerk 30 umfasst in an und für sich bekannter Weise nicht eigens gekennzeichnete Lauf- und Führungsrollen, mit welchen es auf der Tragschiene 22 abläuft und welche den Transportwagen 24 gegen ein Verkippen in Transportrichtung als auch gegen ein Verkippen zur Seite stabilisieren.

Der Transportwagen 24 führt eine Trageinrichtung 32 für die Fahrzeugräder 12 mit sich, die beim vorliegenden Ausführungsbeispiel als Radspindel 34 ausgebildet ist, welche ein zu behandelndes Fahrzeugrad 12 lagert, wie es an und für sich bekannt ist.

Entlang der Hauptkreisstrecke 18 sind nun mehrere Behandlungsstationen 36 angeordnet, welche von den Fahrzeugrädern 12 durchlaufen werden können. Im Allgemeinen können dies Behandlungsstationen 36 zum Beschichten der Fahrzeugräder mit farbgebenden Pulverlacken oder Nasslacken oder auch mit Speziallacken, wie beispielsweise Korrosionsschutzlacken oder dergleichen, sowie Stationen zum Trocknen oder Kühlen oder auch zum mechanischen Bearbeiten der Fahrzeugräder 12 sein. Die Behandlungsstationen 36 können bezogen auf ihre Funktion in beliebiger Reihenfolge angeordnet sein und sich auch in unterschiedlichen Abständen zur Hauptkreisstrecke 18 befinden. Gegebenenfalls können auch verschiedenen Behandlungsstationen 36 auf unterschiedlichen Etagen untergebracht sein.

Wenn vorliegend im Zusammenhang mit einer Beschichtung von "Trocknen" die Rede ist, so sind damit alle Vorgänge gemeint, bei denen die Beschichtung, insbesondere ein Lack, zum Aushärten gebracht werden kann, sei dies nun durch Austreiben von Lösemitteln oder durch Vernetzung der Beschichtungssubstanz. Somit zählt z.B. auch eine Bestrahlung mit elektromagnetischer Strahlung wie beispielsweise UV-Licht zu einem Trockenvorgang.

Die nachstehende Erläuterung der vorhandenen Behandlungsstationen 36 ist lediglich beispielhaft, in der Praxis können bei der Anlage 10 zur Oberflächenbehandlung von Fahrzeugrädern 12 mehr oder weniger und auch Behandlungsstationen 36 anderer Art vorhanden sein, als es nachstehend beschrieben wird.

Die Anlage 10 umfasst eine Vorbehandlungsstation 38, in welcher zu behandelnde Fahrzeugräder 12 in mehreren, hier nicht eigens veranschaulichten Behandlungsschritten vorbehandelt werden. Dabei werden die Fahrzeugräder 12 beispielsweise entfettet, gereinigt, getrocknet und gegebenenfalls in einer Kühlzone abgekühlt.

Es sind außerdem eine erste und eine zweite Pulverlackierstation 40.1, 40.2 vorhanden, welche ihrerseits eine Applikationskabine 42.1, 42.2, in der ein Pulverlack appliziert werden kann, einen Trockner 44.1, 44.2 und eine Kühlzone 46.1, 46.2 umfassen, die von den Fahrzeugrädern 12 in der jeweiligen Pulverlackierstation 40.1, 40.2 durchlaufen werden. Beispielsweise kann in der ersten Pulverlackierstation 40.1 eine graue Pulvergrundierung und in der zweiten Pulverlackierstation 40.2 eine farbige Pulverbeschichtung appliziert werden.

Die Anlage 10 umfasst ferner eine Nasslackierstation 48 mit einer Applikationskabine 50, in der ein Nasslack appliziert werden kann, einem Trockner 52 und einer Kühlzone 54. Statt einer Lackierkabine 50 kann die Nasslackierstation 48 auch mehrere Lackierkabinen umfassen, z.B. kann zunächst ein Silberlack und dann ein Klarlack auf die Fahrzeugräder 12 aufgebracht werden.

Als weitere Behandlungsstation 36 befindet sich an dem Hauptförderer 14 eine Decklackstation 56, welche hier eine Acryllackstation ist und ihrerseits eine Applikationskabine 58 für Acryllack, einen eigenen Trockner 60 und eine eigene Kühlzone 62 umfasst.

Exemplarisch umfasst die Anlage 10 außerdem noch eine separate Kühlstation 64, die eine separate Kühlzone bildet. Statt der separaten Kühlstation 64 oder ergänzend hierzu kann auch eine separate Vorwärmstation vorhanden sein, in welcher zu behandelnde Fahrzeugräder 12 auf eine für die weitere Behandlung gewünschte Temperatur erwärmt werden können. Außerdem ist in der Anlage 10 eine separate Bearbeitungsstation 66 angeordnet, in welcher Fahrzeugräder 12 mechanisch bearbeitet werden können. Insbesondere ist die Bearbeitungsstation 66 eine Glanzdrehstation, in der die Fahrzeugräder in an und für sich bekannter Art und Weise glanzgedreht werden können.

Das Fördersystem 14 umfasst für jede der betrachteten Behandlungsstationen 36 ein jeweiliges Stationsfördersystem 68, mittels welchem Fahrzeugräder 12 von der Hauptkreisstrecke 18 zur Behandlungsstation 36, durch die Behandlungsstation 36 hindurch und von der Behandlungsstation 36 wieder zurück auf die Hauptkreisstrecke 18 förderbar sind.

Hierzu umfassen die Stationsfördersysteme 68 aller Behandlungsstationen 36 mit Ausnahme der separaten Kühlstation 64 jeweils eine Handhabungseinrichtung 70, die beim vorliegenden Ausführungsbeispiel jeweils als mit 72 bezeichneter Gelenkarmroboter ausgebildet ist. Derartige Gelenkarmroboter sind an und für sich bekannt und müssen daher nicht weiter erläutert werden. Mit Hilfe des Gelenkarmroboters 72 können Fahrzeugräder 12 von dem Hauptförderer 16 an die Behandlungsstationen 36, d.h. vorliegend an die jeweilige Applikationskabine 42.1, 42.2, 50 und 58 der Behandlungsstationen 36 und an die Bearbeitungsstation 66, übergeben werden.

Mittels der Stationsfördersysteme 68 werden die Fahrzeugräder 12 in einer jeweiligen Behandlungsstation 36 von der jeweiligen Applikationskabine 42.1, 42.2, 50 und 58 zum jeweils vorhandenen Trockner 44.1, 44.2, 52 oder 60 und von dort zur jeweiligen Kühlzone 46.1, 46.2, 54 oder 62 gefördert. Hierzu sind in den Behandlungsstationen 36 zum Beispiel weitere Handhabungseinheiten, wie beispielsweise Roboter, vorhanden.

Für die Kühlzonen 46.1, 46.2, 54 und 60 umfassen die Stationsfördersysteme 68 jeweils einen Nebenarmförderer 74, die über eine jeweilige Weicheneinheit 76 als Seitenarm von dem Hauptförderer 16 abzweigen, durch die jeweilige Kühlzone 46.1, 46.2, 54 und 60 der Behandlungsstationen 36 hindurch und von dort über eine weitere Weicheneinheit 78 wieder zurück zum Hauptförderer 16 führen. Die Weicheneinheiten 76 und 78 sind lediglich bei dem Nebenarmförderer 74 der Pulverlackierstation 40.1 mit Bezugszeichen versehen. Somit verbindet jeweils ein Nebenarmförderer 74 jeweils eine der Kühlzonen 46.1, 46.2, 54 und 60 der Behandlungsstationen 36 fördertechnisch mit dem Hauptförderer 16.

Nachdem die Fahrzeugräder 12 in den entsprechenden Behandlungsstationen 36 den jeweiligen Trockner 44.1, 44.2, 52 oder 60 durchlaufen haben, werden sie in der jeweiligen Behandlungsstation 36 auf den zugehörigen Nebenarmförderer 74 und so an die Kühlzone 46.1, 46.2, 54 und 60 übergegeben, durchlaufen die jeweilige Kühlzone 46.1, 46.2, 54 und 60 und gelangen dann abgekühlt wieder zum Hauptförderer 16 auf die Hauptkreisstrecke 18 zurück.

Im Falle der separaten Kühlstation 64 ist deren Stationsfördersystem 68 insgesamt durch einen solchen Nebenarmförderer 68 gebildet. Bei der Bearbeitungsstation 66 bildet die vorhandene Handhabungseinrichtung 70 insgesamt das zugehörige Stationsfördersystem 68, ebenso bei der Vorbehandlungsstation 38.

Wie anhand der Kühlstation 64 oder der Bearbeitungsstation 66 ersichtlich ist, kann eine Behandlungsstation 36 auch nur einen einzigen Behandlungsvorgang abdecken. In diesem Fall fördert das zugehörige Stationsfördersystem 68 die Fahrzeugräder 12 durch die Behandlungsstation 36, indem es die Fahrzeugräder 12 in die Behandlungsstation 36 hinein und wieder aus dieser heraus fördert. Hierzu kann die Behandlungsstation 36 auch nur einen einzigen Zugang haben.

Bei einer nicht eigens gezeigten Abwandlung kann auch ein jeweiliges Stationsfördersystem 68 einer Behandlungsstation 36 insgesamt durch einen derartigen Nebenarmförderer 74 ausgebildet sein. Im Falle der Pulverlackierstation 40.1 führt der Nebenarmförderer 74 die Fahrzeugräder 12 dann folglich von der Hauptkreisstrecke 18 des Hauptförderer 16 in die Applikationskabine 42.1, von dort in den Trockner 44.1 und weiter in die Kühlzone 46.1, von wo die Fahrzeugräder wieder zurück auf die Hauptkreisstrecke 18 gelangen.

Bei einer weiteren, ebenfalls nicht gezeigten Abwandlung kann ein Nebenarmförderer 74 auch von der Hauptkreisstrecke 18 direkt zu einem der Trockner 44.1, 44.2, 52 oder 60 der Stationen 40.1, 40.2, 48 oder 56, von dort in eine der jeweils nachgeschalteten Kühlzonen 46.1, 46.2, 54 bzw. 62 und wieder zurück zur Hauptkreisstrecke 18 führen.

Von dem Hauptförderer 16 zweigen außerdem noch ein Aufnahmeförderer 80 und ein Abgabeförderer 82 ab, welche wie die Nebenarmförderer 74 aufgebaut sind, jedoch zur Aufnahme von zu behandelnden Fahrzeugrad-Rohlingen oder zur Abgabe von fertig behandelten Fahrzeugrädern 12 dienen, was durch gestrichelte Pfeile veranschaulicht ist. Wahlweise kann die Aufgabe der zu behandelnden Fahrzeugrad-Rohlinge auch direkt über die Vorbehandlungsstation 38 erfolgen.

Die Anlage 10 und deren einzelne Fördersysteme und Fördereinheiten 18, 68, 70, 80 und 82 werden von einer nur schematisch gezeigten Zentralsteuerung 84 angesteuert und koordiniert, so dass gegebenenfalls auch ein so genannter spindelsynchroner Ablauf der Behandlung der Fahrzeugräder 12 gewährleistet sein kann.

In der Anlage 10 können nun verschiedene Fahrzeugräder 12 in individuellen Behandlungsabläufen behandelt werden. Die Fahrzeugräder 12 können auf dem Hauptförderer 16 wahlweise zu einzelnen Behandlungsstationen 36 und mit deren Stationsfördersystem 68 in diese hinein gefördert werden, um dort behandelt zu werden. Wenn Fahrzeugräder 12 eine bestimmte Behandlungsstation 36 nicht durchlaufen sollen, können sie auf dem Hauptförderer 16 an einer solchen Bearbeitungsstation 36 vorbei geführt werden.

Es ist auch möglich, dass Fahrzeugräder 12 zweimal oder mehrmals hintereinander der gleichen Bearbeitungsstation 36 zugeführt werden, so dass die Fahrzeugräder 12 zweimal oder mehrmals hintereinander dieselbe Behandlung erhalten. Normalräder durchlaufen beispielsweise folgende Behandlungsschritte:
Zunächst werden die entsprechenden Fahrzeugräder 12 in der Vorbehandlungsstation 38 vorbehandelt, wie es oben erläutert wurde. Dann gelangen sie auf dem Hauptförderer 16 zur Pulverlackierstation 40.1, wo sie von deren Stationsfördersystem 68 mit Hilfe des Gelenkarmroboters 72 aufgenommen und in die Applikationskabine 42.1 überführt werden. Nach der dortigen Beschichtung mit Pulverlack durchlaufen die Fahrzeugräder 12 den Trockner 44.1 der Pulverlackierstation 40.1 und erreichen deren Kühlzone 46.1. Dort werden sie auf den Nebenarmförderer 74 übergeben und gelangen dann abgekühlt wieder auf den Hauptförderer zurück.

Nun werden die Fahrzeugräder 12 mit dem Hauptförderer 16 zu der Nasslackierstation 48 gefördert, wo sie von dem Gelenkarmroboter 72 des zugehörigen Stationsfördersystems 68 von dem Hauptförderer 16 in die Applikationskabine 50 übergeben werden. In der Nasslackierstation 48 durchlaufen die Fahrzeugräder 12 dann den dortigen Trockner 52 und die dortige Kühlzone 54, von welcher sie mittels des Nebenarmförderers 74 der Nasslackierstation 48 wieder zurück zum Hauptförderer 16 gefördert werden.

Hiernach können die so beschichteten Fahrzeugräder 12 auf dem Hauptförderer 16 denn zur Acryllackstation 56 gefördert werden, in deren Applikationskabine 58 sie mit Acryllack versiegelt werden, der in dem zugehörigen Trockner 60 eingebrannt wird, worauf die Fahrzeugräder 12 in der Kühlzone 62 abgekühlt werden und dann wieder auf den Hauptförderer 16 gelangen. Auf diesen werden die nun fertigen Normalräder zum Abgabeförderer 82 gefördert, von wo sie entnommen und ihrer weiteren Bestimmung zugeführt werden.

Sonderräder können nun in der gleichen Anlage 10 andere Behandlungsschritte in einer abweichenden Reihenfolge durchlaufen.

Beispielsweise können so genannte Multicolour-Räder 12 in der Vorbehandlungsstation 38 vorbehandelt werden und dann in verschiedenen Pulverlackierstationen 40.1, 40.2 und/oder der Nasslackierstation 48 mit verschiedenartigen und verschiedenfarbigen Lacken versehen werden. Auch hier kann wieder eine Endabdeckung mit Acryllack in der Acryllackstation 56 erfolgen.

Wenn verschiedene zu behandelnde Fahrzeugräder 12, z.B. Sonderräder und Normalräder, jeweils eine andere Vorbehandlung erhalten müssen, so kann die Anlage 10 neben der Vorbehandlungsstation 38 auch noch eine oder mehrere weitere Vorbehandlungsstationen umfassen, die an die für bestimmte Fahrzeugräder 12 notwendige Vorbehandlungen angepasst sind.

So genannte Hochglanzräder werden dagegen außerdem in einem Zwischenschritt zwischen den einzelnen Lackiervorgängen in der Bearbeitungsstation 66 mechanisch bearbeitet. Dabei werden die Fahrzeugräder insbesondere in einer Glanzdreheinrichtung glanzgedreht, wie es an und für sich bekannt ist. Nach dem Glanzdrehen können die Fahrzeugfelgen 12 gegebenenfalls zunächst in der Vorbehandlungsstation 38 nochmals gereinigt und entfettet werden, bevor die glanzgedrehten Bereiche des Fahrzeugrades 12 in der oder den Pulverlackierstationen 40.1, 40.2 oder der Nasslackierstation 48 und der Acryllackierstation 56 beschichtet und versiegelt werden.

Insgesamt entspricht die Anordnung der Behandlungsstationen 36 einer Parallelanordnung entlang des Hauptförderers 16, so dass den Behandlungsstationen 36 parallel Fahrzeugräder 12 zugeführt werden können. Hierdurch können alle Behandlungsstationen 36 unabhängig von den übrigen Behandlungsstationen 36 angefahren und mit Fahrzeugrädern 12 beschickt werden. So können unterschiedliche Fahrzeugräder 12 in ein und derselben Anlage 10 verschiedene Behandlungsstationen 36 in alternativen Abfolgen durchlaufen.

Für den Fall, dass die Behandlungsstationen 36 ausgelastet sind, sich jedoch mehr Fahrzeugräder 12 auf dem Hauptförderer 16 befinden, kann dieser auch als Puffer dienen, indem noch zu behandelnde Fahrzeugräder 12 zunächst an der benötigen Behandlungsstation 36 vorbeigeführt werden und auf der Hauptkreisstrecke 18 nochmals im Umlauf geführt werden, bis sie erneut zur gewünschten Behandlungsstation 36 gelangen.

## Patentansprüche

1. Anlage zur Oberflächenbehandlung von Gegenständen mit
a) wenigstens zwei Behandlungsstationen (36);
b) einem Fördersystem (14), mittels welchem die Gegenstände durch eine jeweilige Behandlungsstation (36) hindurch förderbar sind,
**dadurch gekennzeichnet, dass**
c) das Fördersystem (14) einen Hauptförderer (16) umfasst, mittels welchem Gegenstände behandlungsfrei auf einer Hauptkreisstrecke (18) förderbar sind;
d) die Behandlungsstationen (36) entlang der Hauptkreisstrecke (18) angeordnet sind;
e) das Fördersystem (14) für jede der wenigstens zwei Behandlungsstationen (36) ein jeweiliges Stationsfördersystem (68) umfasst, mittels welchem Gegenstände von der Hauptkreisstrecke (18) zur Behandlungsstation (36), durch die Behandlungsstation (36) und von der Behandlungsstation (36) wieder zurück auf die Hauptkreisstrecke (18) förderbar sind, derart, dass
f) Gegenstände wahlweise mittels eines Stationsfördersystems (68) durch die zugehörige Behandlungsstation (36) oder mittels des Hauptförderers (16) an dieser vorbei gefördert werden können.

2. Anlage nach Anspruch 1, **dadurch gekennzeichnet, dass** wenigstens ein Stationsfördersystem (68) eine Handhabungseinrichtung (70) umfasst, mittels welcher Gegenstände von dem Hauptförderer (16) an die Behandlungsstation (36) übergeben werden können.

3. Anlage nach Anspruch 2, **dadurch gekennzeichnet, dass** der Hauptförderer (16) ein Power-and-Free-Förderer ist.

4. Anlage nach einem der Ansprüche 1 bis 3, **dadurch gekennzeichnet, dass** wenigstens eine Behandlungsstation (36) eine Kühlzone (46.1, 46.2, 54, 62, 64) und der Stationsförderer (68) dieser Behandlungsstation (36) einen Nebenarmförderer (74) umfasst, welcher die Kühlzone (46.1, 46.2, 54, 60, 64) fördertechnisch mit dem Hauptförderer (16) verbindet.

5. Anlage nach einem der Ansprüche 1 bis 4, **dadurch gekennzeichnet, dass** wenigstens eine Vorbehandlungsstation (38) vorhanden ist.

6. Anlage nach einem der Ansprüche 1 bis 5, **dadurch gekennzeichnet, dass** wenigstens eine Pulverlackierstation (40.1, 40.2) vorhanden ist.

7. Anlage nach einem der Ansprüche 1 bis 6, **dadurch gekennzeichnet, dass** wenigstens eine Nasslackierstation (48) vorhanden ist.

8. Anlage nach einem der Ansprüche 1 bis 7, **dadurch gekennzeichnet, dass** wenigstens eine Decklackstation (56) vorhanden ist.

9. Anlage nach einem der Ansprüche 1 bis 8, **dadurch gekennzeichnet, dass** wenigstens eine Bearbeitungsstation (66) vorhanden ist, in welcher die Gegenstände mechanisch bearbeitet werden können.

10. Anlage nach Anspruch 9, **dadurch gekennzeichnet, dass** die Bearbeitungsstation (66) eine Glanzdrehstation ist.

11. Anlage nach einem der Ansprüche 1 bis 10, **dadurch gekennzeichnet, dass** wenigstens eine separate Kühlstation (64) und/oder eine Vorwärmstation vorhanden ist.

12. Anlage nach einem der Ansprüche 1 bis 11, **dadurch gekennzeichnet, dass** die Gegenstände Fahrzeugräder (12) sind.

## Claims

1. Installation for the surface treatment of objects comprising:
a) at least two treatment stations (36);
b) a conveying system (14) by means of which the objects can be conveyed through a respective treatment station (36);
**characterised in that**
c) the conveying system (14) comprises a main conveyor (16) by means of which objects can be conveyed, without being treated, on a main circular route (18);
d) the treatment stations (36) are arranged along the main circular route (18);
e) the conveying system (14) comprises an individual station conveying system (68) for each of the at least two treatment stations (36), by means of which objects can be conveyed from the main circular route (18) to the treatment station (36), through the treatment station (36) and from the treatment station (36) back onto the main circular route (18) again, such that:
f) objects can be conveyed selectively by means of a station conveying system (68) through the associated treatment station (36) or by means of the main conveyor (16) past said treatment station.

2. Installation according to Claim 1, **characterised in that** at least one station conveying system (68) comprises a handling equipment (70) by means of which objects can be transferred from the main conveyor (16) to the treatment station (36).

3. Installation according to Claim 2, **characterised in that** the main conveyor (16) is a power-and-free conveyor.

4. Installation according to one of Claims 1 to 3, **characterised in that** at least one treatment station (36) comprises a cooling zone (46.1, 46.2, 54, 62, 64) and the station conveyer (68) of the said treatment station (36) comprises a branch conveyor (74) which connects said cooling zone (46.1, 46.2, 54, 60, 64) through conveyance to the main conveyor (16).

5. Installation according to one of Claims 1 to 4, **characterised in that** at least one pre-treatment station (38) is present.

6. Installation according to one of Claims 1 to 5, **characterised in that** at least one powder-painting station (40.1, 40.2) is present.

7. Installation according to one of Claims 1 to 6, **characterised in that** at least one wet-painting station (48) is present.

8. Installation according to one of Claims 1 to 7, **characterised in that** at least one top-coating station (56) is present.

9. Installation according to one of Claims 1 to 8, **characterised in that** at least one machining station (66) is present, in which the objects can be mechanically machined.

10. Installation according to Claim 9, **characterised in that** the machining station (66) is a gloss-machining station.

11. Installation according to one of Claims 1 to 10, **characterised in that** at least one separate cooling station (64) and/or one pre-heating station is present.

12. Installation according to one of Claims 1 to 11, **characterised in that** the objects are vehicle wheels (12).
Translator's notes:
1) Claim 1e) *Stationsfördersystem* (68) and Claim 4) *Stationsförderer* (68) has same numeral but different name. Translated as is to English.

## Revendications

1. Installation dévolue au traitement de surfaces d'objets, comprenant
a) au moins deux postes de traitement (36) ;
b) un système de convoyage (14), au moyen duquel lesdits objets peuvent être acheminés à travers un poste de traitement (36) respectif,
**caractérisée par le fait que**
c) le système de convoyage (14) inclut un convoyeur principal (16) au moyen duquel des objets peuvent être acheminés, sans traitement, sur un trajet principal circulaire (18) ;
d) les postes de traitement (36) sont disposés le long dudit trajet principal circulaire (18) ;
e) ledit système de convoyage (14) inclut, pour chacun desdits postes de traitement (36) au nombre minimal de deux, un système de convoyage (68) qui est respectivement affecté à un poste et au moyen duquel des objets peuvent être acheminés vers le poste de traitement (36) à partir du trajet principal circulaire (18), peuvent parcourir ledit poste de traitement (36), puis retourner audit trajet principal circulaire (18) à partir dudit poste de traitement (36), de façon telle que
f) des objets puissent, sélectivement, parcourir le poste de traitement (36) associé, au moyen d'un système de convoyage (68) affecté audit poste, ou être acheminés en regard de ce dernier, au moyen dudit convoyeur principal (16).

2. Installation selon la revendication 1, **caractérisée par le fait qu'**au moins un système de convoyage (68), affecté à un poste, inclut un dispositif de manipulation (70) au moyen duquel des objets peuvent être transférés audit poste de traitement (36) à partir du convoyeur principal (16).

3. Installation selon la revendication 2, **caractérisée par le fait que** le convoyeur principal (16) est un convoyeur suspendu à rail double connu aussi sous la détermination "Power-and-Free".

4. Installation selon l'une des revendications 1 à 3, **caractérisée par le fait qu'**au moins un poste de traitement (36) inclut une zone de refroidissement (46.1, 46.2, 54, 62, 64), et le convoyeur (68) affecté à ce poste de traitement (36) inclut un convoyeur (74) à bras auxiliaire qui assure techniquement la liaison, avec effet de convoyage, entre ladite zone de refroidissement (46.1, 46.2, 54, 60, 64) et le convoyeur principal (16).

5. Installation selon l'une des revendications 1 à 4, **caractérisée par** la présence d'au moins un poste (38) de traitement préalable.

6. Installation selon l'une des revendications 1 à 5, **caractérisée par** la présence d'au moins un poste (40.1, 40.2) de laquage à la poudre.

7. Installation selon l'une des revendications 1 à 6, **caractérisée par** la présence d'au moins un poste (48) de laquage humide.

8. Installation selon l'une des revendications 1 à 7, **caractérisée par** la présence d'au moins un poste (56) de laquage de finition.

9. Installation selon l'une des revendications 1 à 8, **caractérisée par** la présence d'au moins un poste d'usinage (66), dans lequel les objets peuvent être usinés mécaniquement.

10. Installation selon la revendication 9, **caractérisée par le fait que** le poste d'usinage (66) est un poste de polissage brillant.

11. Installation selon l'une des revendications 1 à 10, **caractérisée par** la présence d'au moins un poste distinct (64) de refroidissement, et/ou d'un poste de chauffage préalable.

12. Installation selon l'une des revendications 1 à 11, **caractérisée par le fait que** les objets sont des roues (12) de véhicules.
